# EUROPÄISCHE PATENTSCHRIFT

(11) **EP 1 410 158 B1**
(45) Veröffentlichungstag und Bekanntmachung des Hinweises auf die Patenterteilung: **01.12.2004**
(21) Anmeldenummer: 02747347.9
(22) Anmeldetag: 06.06.2002
(51) Int. Cl.: G06F 1/32

(54) **ELEKTRONISCHE SCHALTUNG MIT ENERGIESTEUERUNG**
POWER CONTROLLED ELECTRONIC CIRCUIT
CIRCUIT ELECTRONIQUE AVEC COMMANDE DE L'ENERGIE

(30) Priorität: 06.06.2001 DE 10127423
(43) Veröffentlichungstag der Anmeldung: 21.04.2004
(73) Patentinhaber: Infineon Technologies AG, 81669 München (DE)
(72) Erfinder: ELBE, Astrid, 81243 München (DE); JANSSEN, Norbert, 81667 München (DE); SEDLAK, Holger, 82054 Sauerlach (DE)
(74) Vertreter: Zinkler, Franz, Dipl.-Ing.
(86) Internationale Anmeldenummer: PCT/EP2002/006233
(87) Internationale Veröffentlichungsnummer: WO 2002/099554

(56) Entgegenhaltungen:
- WO-A-00/07141
- WO-A-01/57790
- KESSELS J ET AL: "Applying asynchronous circuits in contactless smart cards" ADVANCED RESEARCH IN ASYNCHRONOUS CIRCUITS AND SYSTEMS, 2000. (ASYNC 2000). PROCEEDINGS. SIXTH INTERNATIONAL SYMPOSIUM ON EILAT, ISRAEL 2-6 APRIL 2000, LOS ALAMITOS, CA, USA,IEEE COMPUT. SOC, US, 2. April 2000 (2000-04-02), Seiten 36-44, XP010377335 ISBN: 0-7695-0586-4

## Beschreibung

Die vorliegende Erfindung bezieht sich auf elektronische Schaltungen mit einem Controller und insbesondere auf die Steuerung des Controllers bei diesen elektronischen Schaltungen.

Mit der zunehmenden Verbreitung des bargeldlosen Zahlungsverkehrs, der elektronischen Datenübertragung über öffentliche Netze und dem Austausch von Kreditkartennummern über öffentliche Netze steigt der Bedarf nach Kryptographiealgorithmen, um digitale Signaturen, Authentifikationen oder Verschlüsselungsaufgaben durchführen zu können. Bekannte Kryptographiealgorithmen umfassen asymmetrische Verschlüsselungsalgorithmen, wie z.B. den RSA-Algorithmus oder auf elliptischen Kurven basierende Verfahren, oder symmetrische Verschlüsselungsverfahren, wie z.B. Verschlüsselungsverfahren nach dem DESoder AES-Standard.

Um die durch die Kryptographiealgorithmen vorgeschriebenen Berechnungen im Alltag in akzeptabler Geschwindigkeit ausführen zu können, werden eigens vorgesehene Kryptographiecontroller eingesetzt. Solche Kryptographiecontroller werden beispielsweise in Chipkarten, wie z.B. SIM-Karten oder Signaturkarten, beispielsweise zur Zahlung mit dem Mobiltelephon, für Homebankingtransaktionen oder rechtsverbindliche elektronische Unterschriften verwendet. Alternativ werden Kryptographiecontroller in Computern oder Servern als Sicherheits-IC verwendet, um eine Authentifikation durchzuführen, oder um Verschlüsselungsaufgaben übernehmen zu können, welche beispielsweise aus der sicheren Übermittlung von Kreditkartennummern, der Übermittlung von Emails geheimen Inhalts und dem sicheren bargeldlosen Zahlungsverkehr über das Internet bestehen können.

Es werden hohe Anforderungen an die Kryptographiecontroller gestellt, damit dieselben den hohen Ansprüchen der Benutzer genügen und sich auf dem Markt etablieren können. Um eine hohe algorithmische Sicherheit gegenüber Fremdattacken gewährleisten zu können, müssen Kryptrographiecontroller beispielsweise eine beachtliche Rechenleistung zur Verfügung stellen. Der Grund hierfür besteht darin, daß die Sicherheit kryptographischer Algorithmen, wie z.B. des bekannten RSA-Algorithmus, im allgemeinen entscheidend von der Bitlänge des verwendeten Schlüssels abhängt, und daß folglich die Kryptographiecontroller, die die entsprechenden Kryptographiealgorithmen ausführen, in der Lage sein müssen, mit Zahlen möglichst großer Länge umzugehen. Bei dem RSA-Algorithmus haben sich beispielsweise Schlüsselbitlängen von 1024 Bits oder bis zu 2048 Bits durchgesetzt, wobei im Vergleich hierzu derzeitige Allzweckprozessoren mit 8-Bit-, 32-Bit- oder maximal 64-Bit-Zahlen arbeiten.

Weiterhin müssen Kryptographiecontroller eine hohe Rechenleistung aufweisen, um die für den jeweiligen kryptographischen Algorithmus erforderlichen Berechnungen in angemessener Zeit durchführen zu können. So wäre es beispielsweise für einen Benutzer unzumutbar, mehrere Minuten auf eine Authentifikationsüberprüfung oder eine Zahlungstransaktion warten zu müssen. Um diese hohen Rechenleistungen erzielen zu können, verarbeiten bekannte Kryptographiecontroller viele der durchzuführenden Rechenoperationen parallel, um die Rechengeschwindigkeit zu erhöhen.

Bei der Verwendung von Kryptographiecontrollern in Chipkarten, wie z.B. SIM-Karten oder Signaturkarten, ergibt sich ein zusätzliches Problem daraus, daß dieselben als Massenprodukt preisgünstig herstellbar sein müssen. Obwohl dieselben also rechenaufwendige Algorithmen in möglichst kurzer Zeit abarbeiten müssen, darf umgekehrt die elektronische Schaltung nicht zu aufwendig und damit teuer sein.

Ein weiteres Problem bei dem Entwurf von Kryptographiecontrollern ergibt sich aus der Koexistenz vieler allgemein üblicher Kryptographiealgorithmen. In dem Fall einer Chipkarte wird sich beispielsweise derjenige Kryptographiecontroller auf dem Markt durchsetzen, der zur Durchführung der meisten üblichen Kryptographiealgorithmen fähig ist, und der folglich eine breite Einsatzfähigkeit und eine hohe Anwenderfreundlichkeit aufweist. Ein solcher "multifunktionaler" Kryptographiecontroller verhindert beispielsweise, daß ein Benutzer mehrere Chipkarten herumtragen muß, von denen jede für eine spezielle Anwendung bzw. für ein spezielles Kryptographieverfahren vorgesehen ist. Ein solcher multifunktionaler Kryptographiecontroller muß jedoch aufgrund der vielseitigen Verwendung zu einer Vielzahl von Rechenoperationen in der Lage sein, die von den vielen kryptographischen Algorithmen verwendet werden, was zu einer Zunahme der Komplexität oder einer Reduzierung der Geschwindigkeit der elektronischen Schaltung führt.

Ein möglicher Entwurf für einen Kryptographiecontroller, der einerseits eine hohe Multifunktionalität und andererseits eine hohe Verarbeitungsgeschwindigkeit aufweist, besteht aus einem Verbund aus einer zentralen Verarbeitungseinheit und einem oder mehreren Coprozessoren, welche parallel arbeiten, wie es beispielsweise bei modernen PCs aber auch bei modernen Graphikkarten der Fall ist, und welche über ein Bussystem miteinander verbunden sind. Die Coprozessoren übernehmen hierbei aufwendige Rechenaufgaben, die beispielsweise bestimmten Kryptographiealgorithmen oder bestimmten Rechenoperationen zugeordnet sind, wie z. B. eine modulare oder arithmetische Multiplikation.

Ein zusätzliches Problem, dem sich Kryptographiecontroller stellen müssen, besteht nun darin, daß denselben lediglich eine begrenzte Energie zur Verfügung steht. Terminals für kontaktbehaftete Chipkarten liefern beispielsweise einen maximalen Strom von wenigen mA, wobei bei kontaktlosen Anwendungen und mobilen Anwendungen, wie z. B. einer SIM-Karte in einem Handy, der Strom sogar auf unter 10 mA begrenzt sein kann. Folglich ist die Rechengeschwindigkeit der Coprozessoren durch die zur Verfügung stehende Energie begrenzt. Auch die Taktfrequenz mit der die CPU und die Kryptocoprozessoren getaktet werden, unterliegt Einschränkungen durch die zur Verfügung stehende Energie, da bei Implementierung des Controllerchips in CMOS-Technologie der Stromverbrauch von der Taktfrequenz bzw. der Umschaltfrequenz der MOSFETs abhängt.

Den Problemen der geringen und bei kontaktlosen und mobilen Anwendungen sogar schwankenden bzw. abnehmenden zur Verfügung stehenden Energie wird bei herkömmlichen Kryptographiecontrollern lediglich dadurch begegnet, daß dieselben für eine bestimmte minimale Energieversorgung ausgelegt werden. Der gesamte Kryptographiecontroller, d. h. die CPU und die Kryptocoprozessoren, werden mit festen Taktfrequenzen derart getaktet, daß die für die eingestellten Taktfrequenzen notwendige Energie der minimalen Energie entspricht. Folglich ist ein Betrieb der Schaltung nur dann möglich, falls die zur Verfügung stehende Energie ausreicht, d. h. gleich oder größer der minimalen Energie ist. Aufgrund der festen Taktung der Coprozessoren ist die zum Betrieb des Kryptographiecontrollers notwendige Energie zudem unabhängig von der Kryptographiecontrolleraufgabe, so daß beispielsweise für aufwendige RSA-Kryptographieanwendungen ebenso viel Energie erforderlich ist wie für weniger aufwendige, auf elliptischen Kurven basierende Berechnungen. Darüber hinaus geht in dem Fall, daß die zur Verfügung stehende Energie die zum Betrieb des Kryptographiecontrollers erforderliche Energie überschreitet, die zusätzliche zur Verfügung stehende Energie verloren und bleibt ungenutzt. WO 00/07141A schlägt vor, das nutzlose Verlorengehen überschüssiger Leistung bei Kontaktloschipkarten dadurch zu verhindern, daß ein Taktsignalgenerator durch ein Steuersignal zu einer Änderung der Frequenz des Taktsignals angesteuert wird, das zu dem Überschußstrom proportional ist.

Für Chipkarten- und Security-IC-Hersteller wären Kryptographiecontroller mit einer besseren Energieausnutzung von enormer Bedeutung, da hierdurch einerseits die Rechengeschwindigkeit und somit die Wartezeiten an den Terminals und die Anwenderfreundlichkeit erhöht und andererseits bei gleicher Rechengeschwindigkeit die Schaltungskomplexität und damit die Kosten des Controllers, was insbesondere bei Massenprodukten vorteilhaft ist, reduziert werden könnten.

Die Aufgabe der vorliegenden Erfindung besteht darin, eine elektronische Schaltung und ein Verfahren zum Steuern einer elektronischen Schaltung zu schaffen, so daß bei gleicher zur Verfügung stehender Energie die Rechenleistung erhöht ist.

Diese Aufgabe wird durch eine elektronische Schaltung gemäß Anspruch 1 und ein Verfahren gemäß Anspruch 13 gelöst.

Eine erfindungsgemäße elektronische Schaltung umfaßt einen Controller zum Verarbeiten einer Prozessoraufgabe sowie eine Energiebestimmungseinrichtung zum Ermitteln der für den Controller zur Verfügung stehenden Energie. Eine Steuereinrichtung der elektronischen Schaltung steuert den Controller abhängig von der für den Controller zur Verfügung stehenden Energie.

Ein erfindungsgemäßes Verfahren zum Steuern einer elektronischen Schaltung, die einen Controller zum Verarbeiten einer Prozessoraufgabe aufweist, umfaßt das Ermitteln der für den Controller zur Verfügung stehenden Energie sowie das Steuern des Controllers abhängig von der für den Controller zur Verfügung stehenden Energie.

Der vorliegenden Erfindung liegt die Erkenntnis zugrunde, daß durch Ermittlung der für den Controller, wie z.B. einen Kryptographiecontroller, zur Verfügung stehenden Energie eine Optimierung der Rechenzeit einer Operation erzielt werden kann, indem die ermittelte Energie beispielsweise optimal auf die maßgeblichen, d.h. die für eine vorliegende Prozessoraufgabe vorwiegend benötigten, Coprozessoren oder andere Peripherievorrichtungen oder die CPU des Controllers verteilt wird. Obwohl hierzu der elektronischen Schaltung eine Energiebestimmungseinrichtung bzw. ein Energiemesser hinzugefügt wird, wodurch die Komplexität derselben erhöht wird, kann durch die bestmögliche Ausnutzung der Energie einerseits eine Verbesserung der Rechenleistung bei gleichbleibender Schaltungskomplexität und andererseits eine reduzierte Schaltungskomplexität bei gleichbleibender Rechenleistung erzielt werden.

Gemäß einem Ausführungsbeispiel wird die Steuerung des Controllers abhängig von der für den Controller zur Verfügung stehenden Energie durchgeführt, indem der Controllertakt, mit dem der Controller betrieben wird, angehoben wird, wenn mehr Energie zur Verfügung steht, und reduziert wird, wenn weniger Energie zur Verfügung steht. Anders ausgedrückt, wird der Controllertakt entsprechend der ermittelten verfügbaren Energie nachgeführt, um eine bestmögliche Ausnutzung der zur Verfügung stehenden Energie zu erzielen. Dies ist insbesondere bei Verwendung der elektronischen Schaltung bei Chipkarten vorteilhaft, die für eine Anwendung bei Kontaktlosterminals vorgesehen sind, da in diesem Fall die zur Verfügung stehende Energie von dem Abstand der Chipkarte von dem Kontaktlosterminal abhängt und folglich starken Schwankungen unterworfen sind. Zudem reduziert sich in dem Fall einer Chipkarte durch die optimale Energieausnutzung die Wartezeit an dem Terminal für den Chipkartenbesitzer, was die Anwenderfreundlichkeit der Chipkarte erhöht.

Gemäß der Erfindung umfaßt der Controller eine Mehrzahl von Peripherievorrichtungen zum Durchführen zugeordneter Aufgaben, wie z.B. ein UART-Modul (UART = universal asynchronous Receiver-transmitter = universeller asynchroner Sendeempfänger) zum Datenaustausch mit einem Terminal, ein Sensorelement zum Überprüfen sicherheitskritischer Parameter, einen Zufallszahlengenerator, ein Filter oder Coprozessoren zum Durchführen von Rechenaufgaben, wie z.B. ein DES-, RSA oder Hash-Modul, und eine CPU zum Ansteuern der Mehrzahl von Peripherievorrichtungen, wobei die Steuerung des Controllers abhängig von der Prozessoraufgabe, den zugeordneten Aufgaben und der für den Controller zur Verfügung stehenden Energie durchgeführt wird. Die Steuerung kann derart durchgeführt werden, daß einerseits die zur Durchführung der Prozessoraufgabe erforderliche Rechenzeit minimiert ist und außerdem die zur Verfügung stehende Energie ausreichend ist. Dies kann dadurch erzielt werden, daß die ermittelte zur Verfügung stehende Energie immer hauptsächlich für diejenige Peripherievorrichtung oder denjenigen Coprozessor verwendet wird, die bzw. der bei der Applikation bzw. der Prozessoraufgabe, wie z.B. einer Verschlüsselung, Entschlüsselung, Authentifikation oder Signatur nach dem DES-Standard, dem AES-Verfahren, dem RSA-Algorithmus oder dem Elliptischen-Kurven-Verfahren, aber auch einer Datenübertragung, die höchste Energie bzw. Rechenleistung erfordert. Anders ausgedrückt, wird der Controller derart gesteuert, daß einerseits die zur Verfügung stehende Energie zur Verarbeitung der Prozessoraufgabe durch den Controller ausreicht, und andererseits der jeweiligen Peripherievorrichtung bzw. dem jeweiligen Coprozessor zur Durchführung der Rechenaufgabe maximal viel Energie zugewiesen wird.

Bei einem Ausführungsbeispiel wird beispielsweise die zur Verfügung stehende Energie zwischen einer Peripherievorrichtung und einer CPU des Controllers aufgeteilt, indem beispielsweise aufgrund der wenigen von der CPU während einer RSA-Verschlüsselung zu bewältigenden Arbeit die CPU niedrig getaktet und die Peripherievorrichtung, d.h. der zuständige Coprozessor für modulare Multiplikationen, hoch getaktet wird. Bei einem wiederum anderen Ausführungsbeispiel wird die zur Verfügung stehende Energie vornehmlich zwischen zwei Peripherievorrichtungen aufgeteilt, indem beispielsweise während einer Elliptische-Kurven-Verschlüsselung der dazu hauptsächlich vorgesehene Coprozessor hoch getaktet und ein für Nebenrechnungen erforderlicher Coprozessor niedrig getaktet wird. Insgesamt entsteht somit eine Verringerung der benötigten Rechenzeit bei optimaler Energieausnutzung.

Weitere bevorzugte Ausgestaltungen und Weiterbildungen der vorliegenden Erfindung ergeben sich aus den beiliegenden Ansprüchen.

Bevorzugte Ausführungsbeispiele der vorliegenden Erfindung werden nachfolgend bezugnehmend auf die beiliegenden Zeichnungen näher erläutert. Es zeigen:
- Fig. 1: ein Flußdiagramm, anhand dessen die erfindungsgemäße Energiesteuerung einer elektronischen Schaltung und ihre Vorteile erläutert werden;
- Fig. 2: ein Blockdiagramm, das eine elektronische Schaltung gemäß einem Ausführungsbeispiel der vorliegenden Erfindung zeigt;
- Fig. 3: ein Blockschaltbild einer PLL, die zur Taktsteuerung bei der elektronischen Schaltung von Fig. 2 verwendet wird; und
- Fig. 4: eine schematische Zeichnung, die die Abhängigkeit der Taktfrequenz, mit der eine für die aktuelle Prozessoraufgabe relevante Peripherievorrichtung getaktet werden kann, von dem Abstand zu einem Kontaktlosterminal für den Fall veranschaulicht, daß die elektronische Schaltung auf einer Chipkarte angeordnet ist.

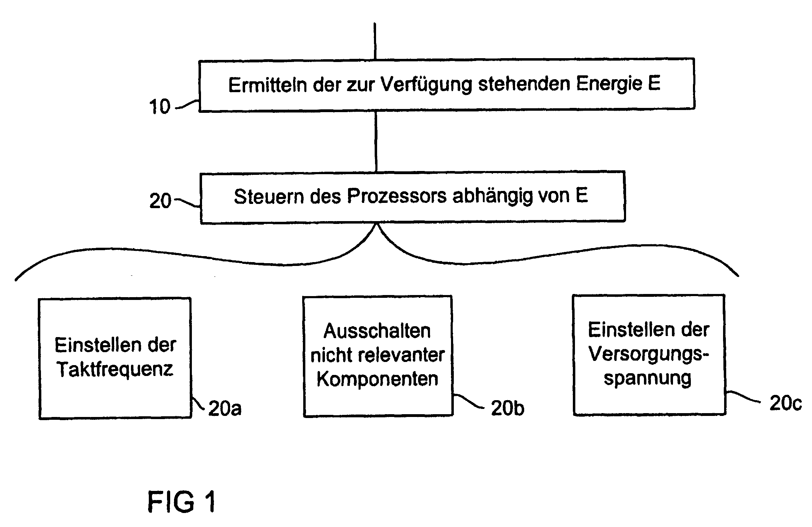

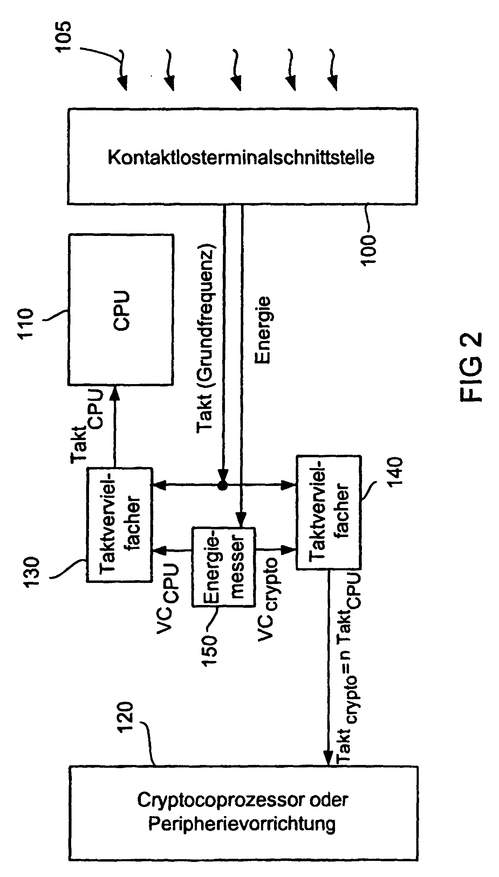

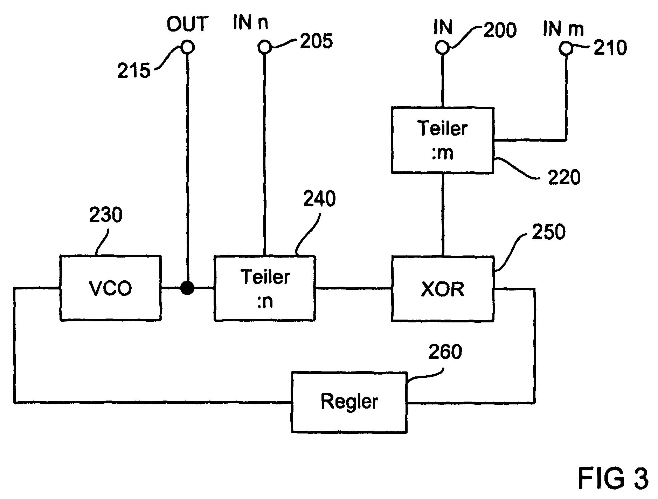

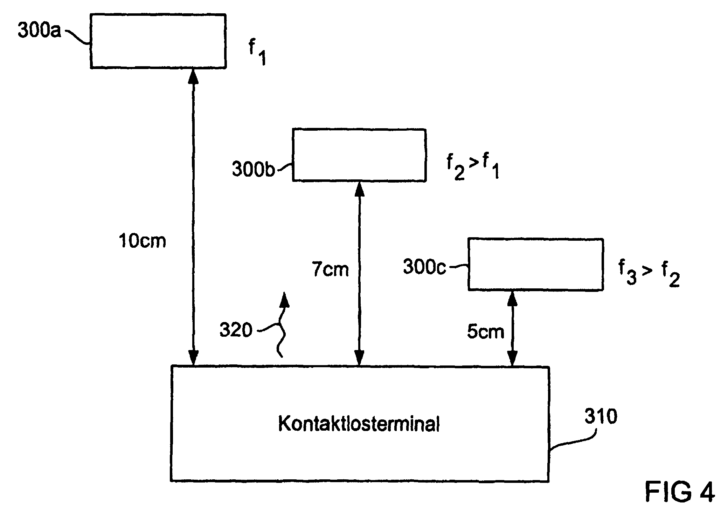

Zunächst werden bezugnehmend auf Fig. 1 die erfindungsgemäße Energiesteuerung und die Vorteile, die sich aus ihr ergeben, beschrieben. Bezugnehmend auf Fig. 2 und 3 wird daraufhin ein Ausführungsbeispiel einer elektronischen Schaltung gemäß der vorliegenden Erfindung beschrieben. Bezugnehmend auf Fig. 4 wird abschließend die Anwendung der erfindungsgemäßen Energiesteuerung in dem Fall von Kontaktlosanwendungen veranschaulicht.

Obwohl die vorliegende Erfindung auf alle elektronischen Schaltungen anwendbar ist, die einen Controller zur Verarbeitung einer Prozessoraufgabe aufweisen, bezieht sich die nachfolgende Beschreibung insbesondere auf das Gebiet der Kryptographie, wobei der Controller im folgenden manchmal als Kryptographieprozessor oder Kryptographiecontroller bezeichnet wird. Eine Übertragung der nachfolgenden Beschreibung auf andere Gebiete, wie z.B. auf Graphikkarten in einem Laptop, ist jedoch ohne weiteres möglich.

Wie es in dem Flußdiagramm von Fig. 1 gezeigt ist, beginnt die erfindungsgemäße Energiesteuerung in einem Schritt 10 mit der Ermittlung der zur Verfügung stehenden Energie E für die elektronische Schaltung. Die zur Verfügung stehende Energie E kann aus verschiedenen Gründen variieren. Bei Anwendung der elektronischen Schaltung bei Chipkarten für Kontaktterminals kann die zur Verfügung stehende Energie beispielsweise von Terminal zu Terminal oder aufgrund von Kontaktgüteschwankungen zwischen dem Kontaktterminal und der elektronischen Schaltung variieren. Bei Kontaktlosanwendungen hängt die zur Verfügung stehende Energie E von dem Abstand einer Kontaktlosterminalschnittstelle der Chipkarte von dem Kontaktlosterminal ab, wie es bezugnehmend auf Fig. 4 näher erläutert werden wird. Bei mobilen Anwendungen, wie z. B. bei Handys, Laptops oder dergleichen, kann die zur Verfügung stehende Energie aufgrund der zunehmenden Entladung der Batterie auftreten. Die Ermittlung selbst kann auf verschiedene Weisen bzw. mittels unterschiedlicher Vorrichtungen durchgeführt werden, wobei verschiedene Parameter als ein Maß für die zur Verfügung stehende Energie verwendet werden können, wie z. B. eine Eingangsspannung oder ein eingekoppelter Strom.

In einem Schritt 20 erfolgt daraufhin eine Steuerung des Controllers der elektronischen Schaltung abhängig von der zur Verfügung stehenden Energie E, die in dem Schritt 10 ermittelt wurde. Wie es in Fig. 1 durch eine geschweifte Klammer dargestellt ist, kann die Steuerung des Controllers abhängig von der Energie E auf verschiedene Weisen durchgeführt werden, wobei in Fig. 1 lediglich exemplarisch drei Möglichkeiten 20a, 20b und 20c gezeigt sind. Eine erste Möglichkeit 20a zur Steuerung des Controllers besteht in dem Einstellen der Taktfrequenz des Controllers abhängig von der zur Verfügung stehenden Energie E. Durch Änderung der Taktfrequenz wird die Umschaltfrequenz der den Controller bildenden Schaltelemente verändert, was beispielsweise bei Implementierung des Controllers in CMOS-Technologie eine Änderung des Stromverbrauches bzw. des Leistungsverbrauchs ergibt. Falls folglich weniger Energie zur Verfügung steht, muß die Taktfrequenz niedriger eingestellt werden, während, wenn mehr Energie zur Verfügung steht, die Taktfrequenz und somit auch die Rechengeschwindigkeit erhöht werden kann. In dem Fall, daß der Controller aus mehreren Komponenten besteht, kann, wie es bezugnehmend auf Fig. 2 näher erläutert werden wird, die Taktfrequenz für jede Komponente, wie z.B. eine CPU oder eine Peripherievorrichtung, wie z.B. ein Coprozessor, einzeln eingestellt werden. Durch Einstellen der Taktfrequenzen der verschiedenen Komponenten kann die zur Verfügung stehende Energie E bestmöglich ausgenützt werden, bzw. vollständig auf alle für die aktuelle Prozessoraufgabe erforderlichen Komponenten verteilt werden. Die Verteilung der zur Verfügung stehenden Energie auf die verschiedenen Komponenten durch Einstellen der verschiedenen Taktfrequenzen kann im Sinne einer Optimierung der Rechenzeit der Prozessoraufgabe durchgeführt werden, wodurch durch die Rechenzeit sowohl durch die maximale Ausnutzung der zur Verfügung stehenden Energie als auch durch die gleichzeitige optimale Verteilung der Energie auf die einzelnen Komponenten minimiert wird.

Eine zweite Möglichkeit 20b zur Steuerung des Controllers besteht in dem Ausschalten von Controllerkomponenten, die für die aktuelle Prozessoraufgabe nicht relevant sind. Diese nicht-relevanten Controllerkomponenten werden beispielsweise durch zusätzliche Schaltelemente, wie z.B. FETs mit geringem Leckstrom, von der Versorgungsspannung getrennt, um dieselben in einen Wartezustand (sleep mode) zu versetzen.

Eine weitere Möglichkeit 20c zur Steuerung des Controllers besteht in dem Einstellen der Versorgungsspannung des gesamten Controllers oder einzelner Komponenten des Controllers. Die Versorgungsspannung könnte beispielsweise in dem Fall, daß die zur Verfügung stehende Energie einen bestimmten Schwellenwert unterschreitet, auf einen niedrigeren Wert eingestellt werden, bei dem die Zuverlässigkeit des Controllerbetriebs geringer aber noch ausreichend ist. Ferner könnte die Versorgungsspannung für analoge Komponenten der elektronischen Schaltung verändert werden, wie z. B. für den analogen Teil einer Kontaktlosterminalschnittstelle der elektronischen Schaltung.

Ein Hauptvorteil der im vorhergehenden bezugnehmend auf Fig. 1 beschriebenen Energiesteuerung besteht darin, daß im Vergleich zu herkömmlichen elektronischen Schaltungen, die für eine bestimmte minimale Versorgungsenergie ausgelegt sind, die zur Verfügung stehende Energie E ermittelt und daraufhin vollständig zum Betrieb des Controllers aufgebraucht wird. Auf diese Weise kann auch der die minimale Versorgungsenergie überschreitende Anteil der zur Verfügung stehenden Energie zur schnelleren Verarbeitung der Prozessoraufgabe verwendet werden. Während folglich bei herkömmlichen elektronischen Schaltungen spezielle Peripherievorrichtungen, die die Gesamtleistungsfähigkeit des Systems maßgeblich bestimmen, nur in festen vorgegebenen Vielfachen eines CPU-Taktes betrieben werden, und dies aber nur dann möglich ist, falls die zur Verfügung stehende Energie hierzu ausreicht, können durch die erfindungsgemäße Energiesteuerung bei überschüssiger zur Verfügung stehender Energie einzelne Peripherievorrichtungen höher getaktet werden, derart, daß die zur Verfügung stehende Energie bestmöglich, d.h. im wesentlichen restlos, ausgenutzt ist.

Zudem kann unter Berücksichtigung der aktuellen Prozessoraufgabe, wie z. B. der Durchführung eines bestimmten Kryptographiealgorithmus, die ermittelte zur Verfügung stehende Energie in Hinblick auf eine Optimierung der Rechenzeit optimal auf die maßgeblichen Coprozessoren verteilt werden, so daß die zu Verfügung stehende Energie nicht nur restlos aufgebraucht sondern auch optimal ausgenutzt bzw. verwendet wird, wodurch die Rechengeschwindigkeit des Controllers bei gleicherbleibender Energie gesteigert und damit die Benutzerwartezeit am Terminal reduziert werden kann.

Bezugnehmend auf Fig. 2 wird im folgenden eine elektronische Schaltung gemäß einem Ausführungsbeispiel der vorliegenden Erfindung beschrieben. Gemäß diesem Ausführungsbeispiel umfaßt die elektronische Schaltung einen Kryptographieprozessor und ist auf einer Chipkarte angeordnet, die für die Anwendung bei Kontaktlosterminals geeignet ist.

Wie es in Fig. 2 zu sehen ist, umfaßt die elektronische Schaltung eine Kontaktlosterminalschnittstelle 100 sowie einen Kryptographieprozessor, der aus einer CPU 110 sowie eine Peripherievorrichtung 120, wie z.B. ein Kryptocoprozessor, ein RNS-Generator oder ein UART-Modul, besteht, wobei im folgenden zur leichteren Veranschaulichung ein Kryptocoprozessor als die Peripherievorrichtung angenommen wird. Der CPU 110 und dem Kryptocoprozessor 120 sind jeweils ein Taktvervielfacher 130 bzw. 140 zugeordnet, die ein Taktsignal Takt_{CPU} bzw. Takt_{Krypto} an die CPU 110 und den Kryptocoprozessor 120 ausgeben, wobei anstatt von Taktvervielfachern auch Taktgeneratoren verwendet werden können. Die Kontaktlosterminalschnittstelle 100, die angeordnet ist, um elektromagnetische Energie 105 von einem Kontaktlosterminal (nicht gezeigt) in elektrische Energie zur Versorgung der elektronischen Schaltung umzuwandeln, und beispielsweise aus einer Antenne, einem Gleichrichter und einem Tiefpaßfilter besteht, führt die Versorgungsenergie sowohl den beiden Taktvervielfachern 130 und 140 als auch einem Energiemesser bzw. einer Energiebestimmungseinrichtung 150 zu. Der Energiemesser 150 gibt abhängig von der Versorgungsenergie bzw. der zur Verfügung stehenden Energie von der Kontaktlosterminalschnittstelle 100 Steuersignale VC_{CPU} und VC_{Krypto} an die beiden Taktvervielfacher 130 und 140 aus, um die Taktfrequenzen der Taktsignale der Taktvervielfacher 130 und 140 zu steuern, die an die CPU 110 und den Coprozessor 120 ausgegeben werden.

Der Kryptographieprozessor, der aus der CPU 110 und dem Kryptocoprozessor 120 besteht, ist beispielsweise zur Verarbeitung bestimmter Prozessoraufgaben geeignet, wie z.B. einer Verschlüsselung, Entschlüsselung, Authentifikation oder Signatur basierend auf dem DES-Standard, dem AES-Verfahren, dem RSA-Algorithmus oder dem Elliptischen-Kurven-Verfahren. Der Kryptocoprozessor 120 ist wiederum zur Durchführung einer bestimmten Rechenaufgabe vorgesehen, wie beispielsweise einer modularen oder arithmetischen Addition, Multiplikation, Exponentation oder Inversbildung, einer Hash-Wertberechnung. In dem Fall einer Peripherievorrichtung 120 kann dieselbe beispielsweise ein RNS-Generator, UART oder Sensor sein. Im allgemeinen sind die Rechenaufgaben des Kryptocoprozessors 120 deutlich rechenaufwendiger als die Steuerungsaufgaben der CPU 110, die darin bestehen, den Kryptocoprozessor 120 anzusteuern, indem dieselbe beispielsweise Befehle, Daten oder sonstige Informationen über einen Bus (nicht gezeigt) an den Kryptocoprozessor 120 ausgibt.

Um die Gesamtrechengeschwindigkeit des Kryptoprozessors zu erhöhen, wird die elektrische Energie, die die Kontaktlosterminalschnittstelle 100 aus der elektromagnetischen Energie 105 gewinnt, durch den Energiemesser 150 ermittelt und mittels der Taktvervielfacher 130 und 140 derart auf die CPU 110 und den Kryptocoprozessor 120 verteilt, daß die CPU mit möglichst geringer Energie versorgt wird, während dem Kryptocoprozessor 120 die maximal mögliche Energie zur Verfügung gestellt wird. Bei der Verteilung der zur Verfügung stehenden Energie auf die CPU 110 und den Kryptocoprozessor 120 wird in dem vorliegenden Fall die Tatsache ausgenutzt, daß das Verändern der Taktfrequenzen der Taktsignale Takt_{CPU} und Takt_{Krypto} dieser Komponenten ferner den Energieverbrauch dieser Komponenten bestimmt. Bei Implementierung des Kryptographieprozessors in CMOS-Technologie hängt der Energieverbrauch beispielsweise von der Umschaltfrequenz der einzelnen MOSFETs ab. Folglich eine vollständige Ausnutzung der zur Verfügung stehenden Energie durch möglichst schnelle Taktung des Kryptocoprozessors 120 erzielt, wodurch eine hohe Rechengeschwindigkeit ermöglicht wird.

In dem in Fig. 2 gezeigten Ausführungsbeispiel sind die Taktvervielfacher 130 und 140 derart gestaltet, daß dieselben bei gleichem Steuersignal Taktsignale Takt_{CPU} und Takt_{Krypto} ausgeben, deren Taktfrequenzen sich um ein festes Vielfaches n unterscheiden. Der Energiemesser 150 wandelt die Versorgungsenergie von der Kontaktlosterminalschnittstelle 100 in gleich hohe Steuersignale VC_{CPU} und VC_{Krypto} um, so daß Takt_{Krypto} = n * Takt_{CPU} gilt. Es ist jedoch ferner möglich, daß der Energiemesser 150 verschieden hohe Taktsignale VC_{CPU} und VC_{Krypto} an die Taktvervielfacher 130 und 140 ausgibt. Der Energiemesser 150 ist entweder als ein Regler gebildet, der die empfangene Versorgungsenergie von der Kontaktlosterminalschnittstelle 100 auf eine durch einen Schaltungsentwurf bestimmte Weise in geeignete Spannungssignale umwandelt, wie z. B. ein Linearregler, oder umfaßt einen A/D-Wandler, um die Versorgungsenergie in digitale Steuersignale VC_{CPU} und VC_{Krypto} umzuwandeln. In dem Fall digitaler Steuersignale kann eine Nachschlagtabelle vorgesehen sein, in der für bestimmte Versorgungsenergiebereiche Steuersignale VC_{CPU} und VC_{Krypto} gespeichert sind, die für den jeweiligen Versorgungsenergiebereich eine optimale Rechenzeit des Kryptographieprozessors sicherstellen.

Die Taktvervielfacher 130 und 140 von Fig. 2 sind in Form von PLLs gebildet, die eine Taktfrequenzvervielfachung einer Eingangsfrequenz um rationale Vielfache n/m ermöglichen. Die Eingangsfrequenz wird beispielsweise durch ein Taktsignal vorgegeben, das von der Kontaktlosterminalschnittstelle 100 erzeugt wird. Die Taktvervielfacher 130 und 140 wandeln folglich ein Taktsignal der Eingangsfrequenz fᵢₙ in ein Taktsignal der Ausgangsfrequenz fₒᵤₜ = n/m x fᵢₙ um. Ein Blockschaltbild der Taktvervielfacher 130 und 140 ist in Fig. 3 gezeigt. Wie es zu sehen ist, umfaßt jeder Taktvervielfacher einen Eingang IN 200, an dem das Taktsignal der Eingangsfrequenz fᵢₙ anliegt, Eingänge INn und INm, an denen der Wert des Zählers n und des Nenners m des rationalen Vielfachen zwischen der Eingangsfrequenz fᵢₙ und der Ausgangsfrequenz fₒᵤₜ anliegt, und einen Ausgang OUT, an dem ein Taktsignal mit der Taktfrequenz fₒᵤₜ ausgegeben wird. Die Schaltung umfaßt neben einem Frequenzteiler 220 eine PLL, die aus einem spannungsgesteuerten Oszillator VCO 230, einem Frequenzteiler 240, einer XOR-Schaltung 250 und einem Regler 260 besteht. Ein Eingang des Frequenzteilers 220 ist mit dem Eingang IN 200 und ein weiterer Eingang mit dem Eingang INm 210 verbunden. An einem Ausgang gibt der Frequenzteiler 220 ein Ausgangssignal der Frequenz fᵢₙ/m aus, wobei der Ausgang mit einem Eingang der XOR-Schaltung 250 verbunden ist. Ein weiterer Eingang der XOR-Schaltung 250 ist mit einem Ausgang des Frequenzteilers 240 verbunden, dessen zwei Eingänge mit dem Eingang INn 205 bzw. einem Ausgang des VCOs 230 verbunden ist. Ein Eingang des VCOs 230 ist über den Regler 260 mit einem Ausgang der XOR-Schaltung 250 verbunden. Der Ausgang des VCOs 230 ist ferner mit dem Ausgang OUT 215 verbunden.

Im folgenden wird nun die Funktionsweise der Schaltung von Fig. 3 beschrieben. Die Steuereingänge INn und Inm, die durch die Steuersignale VC_{CPU} und VC_{Krypto} (siehe Fig. 2) gesteuert werden, können dazu verwendet werden, die Teilerverhältnisse n und m (n,m ∈ 1,2,3...) einzustellen, mit denen die Frequenzteiler 220 und 240 die Frequenzen des Eingangstaktsignals an dem Eingang 200 bzw. des Ausgangssignals des Oszillators 230 teilen. An der XOR-Schaltung 250 liegen an den beiden Eingängen desselben nur dann identische Signale mit gleicher Taktfrequenz fᵢₙ/m und Phase an, falls das Ausgangssignal des VCOs 230 die Ausgangsfrequenz fₒᵤₜ= n/m x f₀ aufweist. Ist dies nicht der Fall, wird durch die XOR-Schaltung 250 in Zusammenarbeit mit dem Regler 260 der spannungsgesteuerte Oszillator 230 nachgeregelt, um das gewünschte Teilerverhältnis zwischen dem Eingangstaktsignal und dem Ausgangstaktsignal zu erzielen. Folglich weist das an dem Ausgang OUT anliegende Taktsignal die erwünschte Frequenz fₒᵤₜ auf.

Nachdem im vorhergehenden der Schaltungsaufbau sowie die Funktionsweise der elektronischen Schaltung von Fig. 2 beschrieben wurde, wird im folgenden anhand von Fig. 4 die vorteilhafte Anwendung derselben bei Chipkarten für Kontaktlosterminals veranschaulicht.

Fig. 4 zeigt schematisch eine Chipkarte, auf der die elektronische Schaltung von Fig. 2 angeordnet ist, in drei Positionen 300a, 300b und 300c relativ zu einem Kontaktlosterminal 310, das eine elektromagnetische Strahlung 320 mit bestimmter Frequenz ausstrahlt. Wie es in Fig. 4 durch Doppelpfeile gezeigt ist, befinden sich die verschiedenen Positionen 300a-300c in verschiedenen exemplarischen Abständen, d. h. 10 cm, 7 cm und 5 cm, zu dem Kontaktlosterminal 310. Da die zur Verfügung stehende Energie E, die in der Kontaktlosterminalschnittstelle (siehe Fig. 2) der elektronischen Schaltung aus der elektromagnetischen Strahlung 320 gewonnen wird, für die elektronische Schaltung von dem Abstand d der Chipkarte von dem Kontaktlosterminal 310 abhängt, kann an den verschiedenen Positionen 300a, 300b und 300c eine je nach Entfernung der Chipkarte von dem Kontaktlosterminal 310 höhere oder niedrigere Taktfrequenz f₁, f₂ bzw. f₃ für den Controller der elektronischen Schaltung eingestellt werden. Befindet sich die Karte weiter von dem Terminal 310 entfernt, so steht weniger Energie für die elektronische Schaltung zur Verfügung, so daß die Taktfrequenz niedriger sein muß. Kommt die Karte näher an das Terminal 310 heran, steht mehr Energie zur Verfügung, so daß der Controller mit einer höheren Taktfrequenz getaktet werden kann. Auf diese Weise wird die Taktfrequenz immer der zur Verfügung stehenden Energie angepaßt, so daß, wenn mehr Energie zur Verfügung steht, eine geringere Rechenzeit ermöglicht wird. Im Gegensatz dazu wurde bei herkömmlichen Kryptographiechipkartenlösungen ein fester Energieverbrauch, wie z.B. eine feste Taktfrequenz, vorgegeben, der beispielsweise einer bestimmten maximalen Entfernung der Chipkarte von dem Terminal 310 entspricht und ein Kompromiß aus einem möglichst ausgedehnten Entfernungsbereich und einer möglichst hohen Rechenleistung war. Folglich war ein Betrieb des Kryptographieprozessors nur innerhalb dieses Bereiches möglich, wobei die bei geringeren Abständen überschüssige Energie nicht umgesetzt wurde.

Zur Vereinfachung der Beschreibung wurde im vorhergehenden bezugnehmend auf Fig. 2 und 4 lediglich der Fall beschrieben, daß ein Kryptographieprozessor aus einer CPU und einer Peripherievorrichtung bzw. einem Kryptocoprozessor besteht. In den weitaus häufigeren Fällen wird ein Kryptographieprozessor jedoch aus mehr Peripherievorrichtungen und Kryptocoprozessoren bestehen. In einem solchen Fall kann die zur Verfügung stehende Energie derart auf beispielsweise die Coprozessoren verteilt werden, daß eine minimale Rechenzeit bei maximaler Energieausnutzung erreicht wird. Dies wird erzielt, indem bei der Verteilung der zur Verfügung stehenden Energie, die durch den Energiemesser ermittelt wird, auf die Coprozessoren und die CPU zusätzlich die aktuelle Prozessoraufgabe und die unterschiedlichen Rechenaufgaben der Coprozessoren und der zugeordneten Aufgaben restlicher Peripherievorrichtungen berücksichtigt werden. Die zur Verfügung stehende Energie wird dann immer für dasjenige bzw. diejenigen Coprozessoren verwendet, die bei der Applikation bzw. der Prozessoraufgabe am meisten beansprucht werden. In dem Fall einer durchzuführenden Authentifikation wird beispielsweise dem Kryptocoprozessor die maximal mögliche Energie zugewiesen, während der CPU und den restlichen Coprozessoren lediglich ein minimaler Anteil der zur Verfügung stehenden Energie zugewiesen wird. Auf ähnliche Weise wird die zur Verfügung stehende Energie durch eine möglichst schnelle Taktung beispielsweise bei einer Verschlüsselungsaufgabe auf das DES-Modul und bei der Berechnung des Hash-Wertes auf das Hash-Modul verteilt. Für die aktuelle Prozessoraufgabe nicht relevante Coprozessoren können sogar vollständig ausgeschaltet bzw. in einen Sleep-Mode versetzt werden, indem dieselben von der Versorgungsspannung getrennt werden, um Leckströme zu vermeiden.

Erzielt werden kann die optimale Aufteilung der zur Verfügung stehenden Energie auf mehrere Coprozessoren, indem jedem Coprozessor ein Taktvervielfacher zugewiesen wird, genauso wie in Fig. 2 dem Kryptocoprozessor 120 der Taktvervielfacher 140 zugewiesen ist. In dem einfachsten Fall beispielsweise, bei dem die Coprozessoren bei Durchführung der Prozessoraufgabe sequentiell verwendet bzw. durch die CPU angesteuert werden, kann die CPU mit der Taktfrequenz f_{CPU} betrieben werden, während die Coprozessoren, die bei der Prozessoraufgabe augenblicklich nicht erforderlich sind, abgeschaltet sein oder mit der Frequenz f_{CPU} betrieben werden können, und während lediglich der Kryptocoprozessor, der bei der Applikation gerade erforderlich ist, mit einer höheren Taktfrequenz getaktet wird, die derart eingestellt ist, daß die zur Verfügung stehende Energie möglichst restlos aufgebraucht wird. Anders ausgedrückt wird eine Optimierung der Rechengeschwindigkeit und eine maximale Energieausnutzung erzielt, indem die Taktfrequenz des gerade hauptsächlich durch die Prozessoraufgabe verwendeten Coprozessors so erhöht oder verringert wird, daß derselbe mit der maximal möglichen Taktfrequenz getaktet wird, und daß die restliche zur Verfügung stehende Energie zum Betrieb der übrigen erforderlichen Komponenten ausreichend ist.

In dem Fall eines parallelen Betriebs der Kryptocoprozessoren könnte die Verteilung der zur Verfügung stehenden Energie auf die Kryptocoprozessoren durch Zugreifen auf eine Nachschlagtabelle durchgeführt werden, in der für bestimmte Bereiche der zur Verfügung stehenden Energie und für bestimmte von dem Kryptographieprozessor unterstützte Applikationen jeweils ein optimierter Satz von Taktfrequenzen für die Kryptocoprozessoren gespeichert ist. Jeder Satz von Taktfrequenzen würde die zugeordnete zur Verfügung stehende Energie im wesentlichen auf diejenigen Kryptocoprozessoren verteilen, deren zugeordnete Rechenaufgaben bei der zugeordneten Applikation benötigt werden. Zudem werden die Taktfrequenzen innerhalb jedes Satzes derart bestimmt, daß die zur Verfügung stehende Energie, der dieser Satz zugeordnet ist, im wesentlichen restlos aufgebraucht wird. Da häufig mehrere Kryptocoprozessoren der gleichen Applikation zugeordnet sind, bzw. Rechenaufgaben durchführen, die bei der gleichen Applikation benötigt werden, können diese Kryptocoprozessoren mit demselben Takt bzw. durch eine PLL getaktet oder in Form eines Taktfrequenzbaumes stets in festen Taktfrequenzverhältnissen zueinander getaktet werden, wodurch sich die Anzahl der zu steuernden Taktfrequenzen verringert.

Obwohl im vorhergehenden beschrieben wurde, daß zur Takteinstellung der Taktsignale für die CPU und den bzw. die Kryptocoprozessoren Taktvervielfacher bzw. PLLs verwendet werden, die lediglich rationale Teilerverhältnisse ermöglichen, ist es ferner möglich anstelle derselben Oszillatoren zu verwenden, die unabhängig voneinander steuerbar sind, so daß ferner teilerfremde Teilerverhältnisse zwischen den Taktfrequenzen der Controllerkomponenten möglich sind. Der Vorteil gegenüber dem im vorhergehenden beschriebenen Fall der Taktvervielfacher besteht darin, daß die zur Verfügung stehende Energie optimaler ausgenützt werden kann, da die Taktfrequenzen nicht nur auf ganzrationale Vielfache sondern ferner teilerfremd zueinander eingestellt werden können. Eine solche Maximierung der Energieausnutzung ist insbesondere bei Anwendungsgebieten interessant, bei denen die zur Verfügung stehende Energie sehr begrenzt ist, so wie dies bei kontaktlosen und mobilen Anwendungen der Fall ist. Das Vorsehen von eigenen Oszillatoren für alle bzw. Gruppen von Kryptocoprozessoren macht jedoch das Einsynchronisieren der betreffenden Kryptocoprozessoren erforderlich, da dieselben asynchron zu der CPU getaktet werden. Alle Eingänge bzw. Ausgänge an dem Host-Interface der betreffenden Kryptocoprozessoren müßten folglich über geeignete Synchronisationseinrichtungen, die beispielsweise aus zwei hintereinander geschalteten Synchronisations-Flip-Flops bestehen, einsynchronisiert werden.

Abschließend wird darauf hingewiesen, daß, obwohl im vorhergehenden bezugnehmend auf Fig. 2 beschrieben worden ist, daß der Controller der elektronischen Schaltung eine CPU und einen Coprozessor umfaßt, jegliche Art von Controllern, ob mit oder ohne Coprozessor, möglich ist. Bereits bei Anwendung der Energiesteuerung lediglich auf den gesamten Controller ergeben sich die meisten der im vorhergehenden beschrieben Vorteile der vorliegenden Erfindung.

Bezugnehmend auf Fig. 2 wird ferner darauf hingewiesen, daß die elektronische Schaltung sowohl auf einer Schaltungsplatine angeordnet als auch in einem Chip integriert sein kann. Ebenso kann der Controller entweder aus einzelnen Komponenten, die auf einer Schaltungsplatine angeordnet sind, oder in einem einzigen Chip integriert sein.

Obwohl im vorhergehenden bezugnehmend auf Fig. 2 und 4 die vorliegende Erfindung bezugnehmend auf eine kontaktlose Anwendung beschrieben worden ist, ist die vorliegende Erfindung ferner auf Anwendungen bei Kontaktterminals oder auf mobile Anwendungen anwendbar. In diesem Fall könnte die Kontaktterminalschnittstelle von Fig. 2 durch einen einfachen Kontakt ersetzt werden.

Es wird ferner darauf hingewiesen, daß, obwohl im vorhergehenden beschrieben worden ist, daß die Taktvervielfacher in der elektronischen Schaltung festverdrahtet sind, dieselben entweder über eine drahtgebundene oder drahtlose Verbindung mit der elektronischen Schaltung verbindbar sein können. Taktvervielfacher bzw. Oszillatoren könnten an dem jeweiligen Terminal vorgesehen sein und erst bei Anwendung der Chipkarte an dem Terminal mit der elektronischen Schaltung zusammenwirken.

### Bezugszeichenliste

- 100: Kontaktlosterminalschnittstelle
- 105: elektromagnetische Energie
- 110: CPU
- 120: Kryptocoprozessor oder Peripherievorrichtung
- 130: Taktvervielfacher
- 140: Taktvervielfacher
- 150: Energiemesser
- 200: Eingang
- 205: Eingang
- 210: Eingang
- 215: Ausgang
- 220: Frequenzteiler
- 230: VCO
- 240: Frequenzteiler
- 250: XOR-Schaltung
- 260: Regler
- 300a: Position
- 300b: Position
- 300c: Position
- 310: Kontaktlosterminal
- 320: elektromagnetische Strahlung

## Patentansprüche

1. Elektronische Schaltung mit
einem Controller (110, 120) zum Verarbeiten einer Prozessoraufgabe;
einer Energiebestimmungseinrichtung (150) zum Ermitteln der für den Controller (110, 120) zur Verfügung stehenden Energie; und
einer Steuereinrichtung (130, 140, 150) zum Steuern des Controllers (110, 120) abhängig von der für den Controller (110, 120) zur Verfügung stehenden Energie,
wobei der Controller (110, 120) folgende Merkmale aufweist:
eine Mehrzahl von Peripherievorrichtungen (120) zum Durchführen zugeordneter Aufgaben; und
eine zentrale Verarbeitungseinheit (110) zum Ansteuern der Mehrzahl von Peripherievorrichtungen (120), und
wobei die Steuereinrichtung (130, 140, 150) angeordnet ist, um die Mehrzahl von Peripherievorrichtungen (120) abhängig von der Prozessoraufgabe, den zugeordneten Aufgaben und der für den Controller (110, 120) zur Verfügung stehenden Energie zu steuern.

2. Elektronische Schaltung gemäß Anspruch 1, bei der die Steuereinrichtung (130, 140, 150) angeordnet ist, um den Controller (110, 120) derart zu steuern, daß eine von dem Controller (110, 120) für die Prozessoraufgabe benötigte Energie im wesentlichen gleich der für den Controller (110, 120) zur Verfügung stehenden Energie ist.

3. Elektronische Schaltung gemäß Anspruch 1 oder 2, die ferner folgendes Merkmal aufweist:
eine Energiebereitstellungseinrichtung (100) zum Erzeugen der für den Controller (110, 120) zur Verfügung stehenden Energie aus einer extern zugeführten elektromagnetischen Energie (105).

4. Elektronische Schaltung gemäß einem der Ansprüche 1 bis 3, die als integrierte Schaltung ausgebildet ist, die für eine Anwendung bei Kontaktlosterminals (310) geeignet ist.

5. Elektronische Schaltung gemäß einem der Ansprüche 1 bis 4, bei der die Steuereinrichtung (130, 140, 150) folgendes Merkmal aufweist:
eine Einrichtung (130, 140) zum Einstellen des Controllertakts, mit dem der Controller (110, 120) betrieben wird, wobei eine Taktrate des Controllertakts angehoben wird, wenn mehr Energie zur Verfügung steht, und verringert wird, wenn weniger Energie zur Verfügung steht.

6. Elektronische Schaltung gemäß einem der Ansprüche 1 bis 5, bei der der Controller (110, 120) in CMOS-Technologie implementiert ist.

7. Elektronische Schaltung gemäß einem der vorhergehenden Ansprüche, bei der die Steuereinrichtung (130, 140, 150) angeordnet ist, um die Peripherievorrichtungen (120) derart zu steuern, daß die für die Durchführung der Prozessoraufgabe durch den Controller (110, 120) erforderliche Rechenzeit minimiert ist.

8. Elektronische Schaltung gemäß einem der vorhergehenden Ansprüche, bei der der Controller (110, 120) ein Kryptographieprozessor ist, und die Mehrzahl von Peripherievorrichtungen (120) Kryptocoprozessoren (120) zum Durchführen von Rechenaufgaben sind, und wobei die Prozessoraufgabe aus einer Gruppe ausgewählt ist, die eine Verschlüsselung, Entschlüsselung, Authentifikation und Signatur nach dem DES-Standard, dem AES-Verfahren, dem RSA-Algorithmus und dem Elliptischen-Kurven-Verfahren umfaßt, und wobei die Rechenaufgaben der Mehrzahl von Kryptocoprozessoren (120) aus einer Gruppe ausgewählt sind, die eine modulare und nicht-modulare Addition, Multiplikation, Exponentation und Inversbildung, eine Hash-Wertberechnung und eine Zufallszahlermittlung umfaßt.

9. Elektronische Schaltung gemäß einem der vorhergehenden Ansprüche, bei der die Steuereinrichtung (130, 140, 150) ferner folgendes Merkmal aufweist:
eine Einrichtung zum Einstellen der Peripherievorrichtungstakte, mit denen die Mehrzahl von Peripherievorrichtungen (120) betrieben wird; und
eine Einrichtung zum Ausschalten einzelner Peripherievorrichtungen (120) der Mehrzahl von Peripherievorrichtungen.

10. Elektronische Schaltung gemäß Anspruch 9, bei der die Einrichtung (140) zum Einstellen der Peripherievorrichtungstakte (120) einen Oszillator aufweist, der einem der Mehrzahl von Peripherievorrichtungen zugeordnet ist und ein Taktsignal mit einer Ausgangstaktfrequenz erzeugt, mit der die zugeordnete Peripherievorrichtung (120) getaktet wird.

11. Elektronische Schaltung gemäß Anspruch 9, bei der die Einrichtung (140) zum Einstellen der Peripherievorrichtungstakte (120) einen Taktvervielfacher aufweist, der einem der Mehrzahl von Peripherievorrichtungen zugeordnet ist und ein Taktsignal mit einer Ausgangstaktfrequenz erzeugt, mit der die zugeordnete Peripherievorrichtung (120) getaktet wird.

12. Elektronische Schaltung gemäß einem der vorhergehenden Ansprüche, bei der der Controller (110, 120) eine Peripherievorrichtung (120) zum Durchführen einer zugeordneten Aufgabe und eine zentrale Verarbeitungseinheit (110) zum Ansteuern der Peripherievorrichtung (120) aufweist, und die Steuereinrichtung (130, 140, 150) eine erste Einrichtung (130) zum Einstellen eines ersten Takts, mit dem die zentrale Verarbeitungseinheit (110) betrieben wird, und eine zweite Einrichtung (140) zum Einstellen eines zweiten Takts, mit dem die Peripherievorrichtung (120) betrieben wird, aufweist, wobei der erste und der zweite Takt derart eingestellt werden, daß die zur Verfügung stehende Energie zur Verarbeitung der Prozessoraufgabe ausreicht, und gleichzeitig der Peripherievorrichtung (120) zur Durchführung der zugeordneten Aufgabe eine maximal mögliche Energie zugewiesen wird.

13. Verfahren zum Steuern einer elektronischen Schaltung, die einen Controller (110, 120) zum Verarbeiten einer Prozessoraufgabe aufweist, wobei der Controller (110, 120) eine Mehrzahl von Peripherievorrichtungen (120) zum Durchführen zugeordneter Aufgaben und eine zentrale Verarbeitungseinheit (110) zum Ansteuern der Mehrzahl von Peripherievorrichtungen (120) aufweist, wobei das Verfahren folgende Schritte aufweist:
Ermitteln (10) der für den Controller (110, 120) zur Verfügung stehenden Energie; und
Steuern (20) des Controllers (110, 120) abhängig von der für den Controller (110, 120) zur Verfügung stehenden Energie,
wobei das Steuern durchgeführt wird, um die Mehrzahl von Peripherievorrichtungen (120) abhängig von der Prozessoraufgabe, den zugeordneten Aufgaben und der für den Controller (110, 120) zur Verfügung stehenden Energie zu steuern.

## Claims

1. Electronic circuit comprising:
a controller (110, 120) for processing a processor task;
an energy determination means (150) for determining the energy available to the controller (110, 120); and
a control means (130, 140, 150) for controlling the controller (110, 120) depending on the energy available to the controller (110, 120),
wherein the controller (110, 120) comprises:
a plurality of peripheral devices (120) for performing associated tasks,
a central processing unit (110) for controlling the plurality of peripheral devices (120), and
wherein the control means (130, 140, 150) is disposed to control the plurality of peripheral devices in dependency on the processor task, the associated tasks and the energy available to the controller.

2. Electronic circuit as claimed in claim 1, wherein the control means (130, 140, 150) is arranged so as to control the controller (110, 120) such that an energy required by the controller (110, 120) for the processor task is essentially equal to the energy available to the controller (110, 120).

3. Electronic circuit as claimed in claim 1 or 2, further comprising:
an energy provision means (100) for producing the energy available to the controller (110, 120) from electromagnetic energy (105) supplied externally.

4. Electronic circuit as claimed in any of claims 1 to 3, which is designed as an integrated circuit suitable for an application with contact-less terminals (310).

5. Electronic circuit as claimed in any of claims 1 to 4, wherein the control means (130, 140, 150) comprises:
a means (130, 140) for setting the controller clock with which the controller (110, 120) is operated, wherein a clock rate of the controller clock is increased when there is more energy available and decreased when there is less energy available.

6. Electronic circuit as claimed in any of claims 1 to 5, wherein the controller (110, 120) is implemented in CMOS technology.

7. Electronic circuit as claimed in any of the previous claims, wherein the control means (130, 140, 150) is arranged so as to control the peripheral devices (120) such that the computing time required for the performance of the processor task by the controller (110, 120) is minimized.

8. Electronic circuit as claimed in any of the previous claims, wherein the controller (110, 120) is a cryptography processor, and the plurality of peripheral devices (120) are cryptocoprocessors (120) for performing computing tasks, and wherein the processor task is selected from a group consisting of an encryption, a decryption, an authentication and a signature according to the DES standard, the AES method, the RSA algorithm and the elliptic-curve method, and wherein the computing tasks of the plurality of cryptocoprocessors (120) are selected from a group including a modular and non-modular addition, multiplication, exponentiation and inversion, a hash-value calculation and a random number determination.

9. Electronic circuit as claimed in any of the previous claims, wherein the control means (130, 140, 150) further comprises:
a means for setting the peripheral device clocks with which the plurality of peripheral devices (120) are operated; and
a means for switching off individual peripheral devices (120) of the plurality of peripheral devices.

10. Electronic circuit as claimed in claim 9, wherein the means (140) for setting the peripheral device clocks (120) comprises an oscillator associated with one of the plurality of peripheral devices and producing a clock signal with an output clock frequency with which the associated peripheral device (120) is clocked.

11. Electronic circuit as claimed in claim 9, wherein the means (140) for setting the peripheral device clocks (120) comprises a clock multiplier associated with one of the plurality of peripheral devices and producing a clock signal with an output clock frequency with which the associated peripheral device (120) is clocked.

12. Electronic circuit as claimed in any of the previous claims, wherein the controller (110, 120) comprises a peripheral device (120) for performing an associated task, and a central processing unit (110) for driving the peripheral device (120), and wherein the control means (130, 140, 150) comprises a first means (130) for setting a first clock with which the central processing unit (110) is operated, and a second means (140) for setting a second clock with which the peripheral device (120) is operated, the first and second clocks being set such that the energy available suffices for processing the processor task and that, at the same time, the peripheral device (120) is assigned a maximum energy possible for performing the associated task.

13. Method for controlling an electronic circuit comprising a controller (110, 120) for processing a processor task, wherein the controller (110, 120) comprises a plurality of peripheral devices (120) for performing associated tasks, a central processing unit (110) for controlling the plurality of peripheral devices, the method comprising:
determining (10) the energy available to the controller (110, 120); and
controlling (20) the controller (110, 120) depending on the energy available to the controller (110, 120), wherein the controlling is performed to control the plurality of peripheral devices (120) in dependency on the processor task, the associated tasks and the energy available to the controller (110, 120).

## Revendications

1. Circuit électronique, qui comporte :
un contrôleur (110, 120) pour le traitement d'une tâche de processeur ;
un dispositif de détermination d'énergie (150) pour la détermination de l'énergie mise à la disposition du contrôleur (110, 120); et
un dispositif de commande (130, 140, 150) pour la commande du contrôleur (110, 120) en fonction de l'énergie mise à la disposition du contrôleur (110, 120),
et dans lequel le contrôleur (110, 120) a les caractéristiques suivantes :
une multiplicité de dispositifs périphériques (120) pour l'exécution de tâches associées ; et
une unité centrale de traitement (110) pour la commande de la multiplicité de dispositifs périphériques (120), et
le dispositif de commande (130, 140, 150) est prévu pour commander la multiplicité de dispositifs périphériques (120) en fonction de la tâche de processeur, des tâches associées et de l'énergie mise à la disposition du contrôleur (110, 120).

2. Circuit électronique selon la revendication 1, dans lequel le dispositif de commande (130, 140, 150) est prévu pour commander le contrôleur (110, 120) de telle sorte qu'une énergie nécessaire au contrôleur (110, 120) pour la tâche de processeur est sensiblement égale à l'énergie mise à la disposition du contrôleur (110, 120).

3. Circuit électronique selon la revendication 1 ou 2, ayant aussi la caractéristique suivante :
un dispositif de fourniture d'énergie (100) pour la production de l'énergie mise à la disposition du contrôleur (110, 120) à partir d'une énergie électromagnétique (105) amenée de l'extérieur.

4. Circuit électronique selon l'une des revendications 1 à 3, qui est conçu comme un circuit intégré qui convient à une utilisation dans le cas de terminaux sans contact (310).

5. Circuit électronique selon l'une des revendications 1 à 4, dans lequel le dispositif de commande (130, 140, 150) a la caractéristique suivante :
un dispositif (130, 140) pour le réglage de l'horloge de contrôleur avec laquelle le contrôleur (110, 120) est exploité, la fréquence de l'horloge de contrôleur étant augmentée si plus d'énergie est disponible et étant réduite si moins d'énergie est disponible.

6. Circuit électronique selon l'une des revendications 1 à 5, dans lequel le contrôleur (110, 120) est mis en oeuvre en technologie CMOS.

7. Circuit électronique selon l'une des revendications précédentes, dans lequel le dispositif de commande (130, 140, 150) est prévu pour commander les dispositifs périphériques (120) de telle sorte que le temps de calcul nécessaire à l'exécution de la tâche de processeur par le contrôleur (110, 120) est minimisé.

8. Circuit électronique selon l'une des revendications précédentes, dans lequel le contrôleur (110, 120) est un processeur de cryptographie et les dispositifs périphériques (120) sont des coprocesseurs cryptographiques (120) pour l'exécution de tâches de calcul, la tâche de processeur étant sélectionnée dans un groupe qui comprend cryptage, décryptage, authentification et signature selon le standard DES, selon le procédé AES, selon l'algorithme RSA et selon le procédé des courbes elliptiques et les tâches de calcul des coprocesseurs cryptographiques (120) étant sélectionnées dans un groupe qui comprend addition modulaire et addition non modulaire, multiplication, exponentiation, inverse, calcul de code hash et détermination de nombre aléatoire.

9. Circuit électronique selon l'une des revendications précédentes, dans lequel le dispositif de commande (130, 140, 150) a aussi les caractéristiques suivantes :
un dispositif pour le réglage des horloges de dispositifs périphériques avec lesquelles les dispositifs périphériques (120) sont exploités ; et
un dispositif pour l'arrêt de certains des dispositifs périphériques (120).

10. Circuit électronique selon la revendication 9, dans lequel le dispositif (140) pour le réglage des horloges de dispositifs périphériques (120) comporte un oscillateur qui est associé à l'un des dispositifs périphériques et qui produit un signal d'horloge ayant une fréquence d'horloge de sortie à laquelle le dispositif périphérique (120) associé est soumis.

11. Circuit électronique selon la revendication 9, dans lequel le dispositif (140) pour le réglage des horloges de dispositifs périphériques (120) comporte un multiplicateur d'horloge qui est associé à l'un des dispositifs périphériques et qui produit un signal d'horloge ayant une fréquence d'horloge de sortie à laquelle le dispositif périphérique (120) associé est soumis.

12. Circuit électronique selon l'une des revendications précédentes, dans lequel le contrôleur (110, 120) comporte un dispositif périphérique (120) pour l'exécution d'une tâche associée et une unité centrale de traitement (110) pour la commande du dispositif périphérique (120) et dans lequel le dispositif de commande (130, 140, 150) comporte un premier dispositif (130) pour le réglage d'une première horloge avec laquelle l'unité centrale de traitement (110) est exploitée et un deuxième dispositif (140) pour le réglage d'une deuxième horloge avec laquelle le dispositif périphérique (120) est exploité, la première et la deuxième horloge étant réglées de telle sorte que l'énergie mise à disposition suffit au traitement de la tâche de processeur et que simultanément l'énergie maximale possible est attribuée au dispositif périphérique (120) pour l'exécution de la tâche associée.

13. Procédé pour la commande d'un circuit électronique qui comporte un contrôleur (110, 120) pour le traitement d'une tâche de processeur, le contrôleur (110, 120) comportant une multiplicité de dispositifs périphériques (120) pour l'exécution de tâches associées et une unité centrale de traitement (110) pour la commande de la multiplicité de dispositifs périphériques (120), le procédé ayant les étapes suivantes :
détermination (10) de l'énergie mise à la disposition du contrôleur (110, 120) ; et
commande (20) du contrôleur (110, 120) en fonction de l'énergie mise à la disposition du contrôleur (110, 120), la commande étant effectuée pour commander la multiplicité de dispositifs périphériques (120) en fonction de la tâche de processeur, des tâches associées et de l'énergie mise à la disposition du contrôleur (110, 120).
